## Europäisches Patentamt
## European Patent Office
## Office européen des brevets

(11) Veröffentlichungsnummer: **0 132 685**
**B1**

(12) # EUROPÄISCHE PATENTSCHRIFT

(45) Veröffentlichungstag der Patentschrift:
18.03.87

(21) Anmeldenummer: 84108033.6

(22) Anmeldetag: 09.07.84

(51) Int. Cl.⁴: **C 08 G 59/42,** C 08 G 59/22, C 08 G 59/38, H 01 B 3/40

(54) Verfahren zur Herstellung von Epoxidharzformstoffen.

(30) Priorität: 22.07.83 DE 3326532

(43) Veröffentlichungstag der Anmeldung·
13.02.85 Patentblatt 85/7

(45) Bekanntmachung des Hinweises auf die Patenterteilung:
18.03.87 Patentblatt 87/12

(84) Benannte Vertragsstaaten:
AT BE CH DE FR GB IT LI NL SE

(56) Entgegenhaltungen:
EP-A-0 107 103
CH-A-533 655
DE-A-2 642 465

(73) Patentinhaber: **Siemens Aktiengesellschaft Berlin und München, Wittelsbacherplatz 2, D-8000 München 2 (DE)**

(72) Erfinder: **Kleeberg, Wolfgang, Dr., Hessenstrasse 7, D-8520 Erlangen (DE)**
Erfinder: **Hacker, Heinz, Dr., Kaiserslauterer Strasse 9, D-8500 Nürnberg (DE)**
Erfinder: **Hauschildt, Klaus- Robert, Balthasar- Neumann- Strasse 83, D-8500 Nürnberg (DE)**
Erfinder: **Kretzschmar, Klaus, Dr., Im Heuschlag 5, D-8520 Erlangen (DE)**

## Beschreibung

Die Erfindung betrifft ein Verfahren zur Herstellung von kriechstromfesten Epoxidharzformstoffen aus Epoxidharzmassen auf der Basis von Di- oder Polycarbonsäureglycidylestern, di- oder polyfunktionellen cycloaliphatischen Olefinepoxiden, Dicarbonsäureanhydriden und Reaktionsbeschleunigern sowie gegebenenfalls Füllstoffen und weiteren Additiven.

Für energietechnische Geräte und Anlagen werden oft elektrische Isolierbauteile großen Volumens und mit großen Wandstärkeunterschieden innerhalb des einzelnen Bauteils benötigt. Die Isolierwerkstoffbasis bilden dabei im allgemeinen Reaktionsharzformstoffe, insbesondere Epoxidharzformstoffe, welche meistens noch Füllstoffe enthalten. Werden hohe Anforderungen an die mechanische Festigkeit gestellt, so wird das Eigenschaftsbild durch einen genormten Formstoff auf der Basis von Araldit® B (Formstoff 1000-6) repräsentiert.

Die technische Weiterentwicklung energietechnischer Geräte und Anlagen zielt unter anderem auf eine höhere Leistung pro Volumeneinheit ab. Damit steigen aber die Anforderungen an die mechanisch-thermische Belastbarkeit der Isolierbauteile. Eine zusätzliche Forderung, beispielsweise für Schaltanlagen, ist eine hohe Kriechstromfestigkeit entsprechend der Stufe KA 3c bzw. KB 600 (DIN 53 480). Weiter wird oft auch Freiluftbeständigkeit gefordert. Moderne Produktionsverfahren verlangen darüber hinaus wirtschaftliche Herstellungsverfahren, beispielsweise durch Spritzgießen.

In letzter Zeit hat sich herausgestellt, daß Epoxidharze, welche zur Herstellung von Formstoffen der vorstehend genannten Art verwendet werden könnten, auch nach toxikologischen Gesichtspunkten ausgewählt werden müssen, um das Gefährdungspotential während der Verarbeitung zu minimieren. Dieses Erfordernis führt zu einer Reduzierung der für einen technischen Einsatz verfügbaren Epoxidharzverbindungen und damit zu einer drastischen Einschränkung der Synthese polymerer Reaktionsharznetzwerke, insbesondere solcher, welche zur Realisierung von Formstoffen mit den vorstehend genannten Eigenschaften verwendet werden könnten.

Dies gilt auch für die spritzgießbaren füllstoffhaltigen Epoxidharzsysteme auf der seit einigen Jahren verfügbaren Basis 1.3-Bisglycidyl-5.5-dimethylhydantoin/ 1-Glycidyl-3-β-glycidyloxypropyl-5.5-dimethylhydantoin/ 1-Glycidyl-3-β-hydroxypropyl-5.5-dimethylhydantoin mit dem Isomerengemisch des Methyltetrahydrophthalsäureanhydrids. Mit diesem System können Isolierwerkstoffe und Bauteile, beispielsweise für Mittelspannungsschaltanlagen, hergestellt werden, die den gestiegenen Anforderungen genügen. Es hat sich aber gezeigt, daß die chemische Basis dieser Systeme aus toxikologischen Gründen ersetzt werden muß.

Es stellte sich deshalb die Aufgabe, ein spritzgießbares Harzsystem auf der Basis langfristig verfügbarer, toxikologisch unbedenklicher Epoxidharze zu finden, das in elektrischer und mechanisch-thermischer Hinsicht dem genannten Hydantoinsystem mindestens gleichwertig ist.

Aus der Technologie der Epoxidharze ist es bekannt, daß Harze unterschiedlicher Struktur (E1, E2...) und Polyadditionskomponenten, wie Dicarbonsäureanhydride, unterschiedlicher Struktur (S1, S2...) - unter Einhaltung stöchiometrischer Randbedingungen - nach Art und Mengenanteil in weiten Grenzen variierbar zum Aufbau von Reaktionsharznetzwerken kombiniert werden können. Die Formstoffeigenschaften von Kombinationssystemen (E1, E2... und S1, S2...) können aus den Formstoffeigenschaften der Randsysteme (wie E1/S1, E2/S2, E1/S2, E2/S1) und den unter Einhaltung stöchiometrischer Randbedingungen und adäquater Reaktionsbedingungen eingesetzten Masseanteilen häufig tendenziell abgeschätzt werden. Die Kenntnisse über Aufbau und Eigenschaften von Epoxidharznetzwerken reichen für quantitative Abschätzungen jedoch nicht aus, so daß eine empirische Optimierungsarbeit zu leisten ist.

Das Problem bestand nun darin, einen Ersatz für das vorstehend genannte Hydantoinsystem zu finden, das folgende Eigenschaften besitzt:

Biegefestigkeit (BF): 128 N/mm$^2$ (DIN 53 452)
Schlagzähigkeit (SZ): 12 kJ/m$^2$ (DIN 53 453)
Wärmeformbeständigkeit nach Martens ($T_M$): 126°C (DIN 53 458)
Kriechstromfestigkeit (KB-Verfahren): > 600 (DIN 53 480).

Um die geforderten Eigenschaften zu erreichen, wurden Epoxidharzsysteme auf der Basis von Di- oder Polycarbonsäureglycidylestern, di- oder polyfunktionellen cycloaliphatischen Olefinepoxiden und Dicarbonsäureanhydriden ausgewählt. Dabei zeigte sich, daß mit derartigen Systemen zwar gute Ergebnisse bei der Herstellung von Normstäben, d.h. von kleinvolumigen Teilen, erzielt werden können, bei der Herstellung von größervolumigen Bauteilen aber Formstoffe mit mangelhafter mechanischer Festigkeit erhalten werden.

Aufgabe der Erfindung ist es, die Herstellung von Epoxidharzformstoffen aus Epoxidharzmassen auf der Basis von Di- oder Polycarbonsäureglycidylestern, di- oder polyfunktionellen cycloaliphatischen Olefinepoxiden und Dicarbonsäureanhydriden in der Weise durchzuführen, daß auch bei größervolumigen Bauteilen Formstoffe mit guten mechanischen Eigenschaften erhalten werden.

Dies wird erfindungsgemäß dadurch erreicht, daß eine durch das Verhältnis Glycidylester/Olefinepoxid bedingte synergistische Erhöhung der Vernetzungsgeschwindigkeit der Epoxidharzmasse und die zur Senkung der Vernetzungsgeschwindigkeit der Epoxidharzmasse wenigstens auf die Vernetzungsgeschwindigkeit des Glycidylester/Dicarbonsäureanhydrid-Systems erforderliche Menge eines Di- oder Polyols anhand der experimentell bestimmten Zeit bis zum Erreichen der Höchsttemperatur während der Vernetzung der

2

Epoxidharzmasse unter quasi-adiabatischen Bedingungen ermittelt und die ermittelte Menge an Di- bzw. Polyol der Epoxidharzmasse zugesetzt wird.

Bei der näheren Untersuchung des Systems Glycidylester/ cycloaliphatisches Olefinepoxid/Dicarbonsäureanhydrid wurde nämlich überraschenderweise eine synergistische Beschleunigung, d.h. eine Erhöhung der Vernetzungsgeschwindigkeit, festgestellt. Diese synergistische Beschleunigung kann zur Herstellung von Gießharzformteilen kleinen Volumens (etwa 0,1 bis 100 ml) technisch vorteilhaft genutzt werden. Bei Gießharzformteilen größeren Volumens, beispielsweise bei Formteilen mit einem Volumen von ca. 10 l, verläuft - insbesondere bei Formteilen mit größeren Wandstärkeunterschieden (beispielsweise zwischen 1 und 40 mm) und somit unterschiedlich schneller Abführung der Reaktionswärme in die Spritzgießform - der Netzwerkaufbau des Reaktionsharzsystems im Gießharzformteil aber unterschiedlich schnell, und dementsprechend entstehen dabei Zonen geringer mechanischer Festigkeit, die beispielsweise an Rissen in den entformten Spritzgußteilen zu erkennen sind.

Erfindungsgemäß wird nun die synergistische Beschleunigung in den genannten Epoxidharzsystemen, die vom Verhältnis Glycidylester/Olefinepoxid abhängig ist, bestimmt und die Vernetzungsgeschwindigkeit der Epoxidharzmasse - unter Einhaltung der Stöchiometrie - durch Zugabe eines Di- oder Polyols in der Weise gesteuert, daß die Vernetzung wenigstens dieselbe Zeit beansprucht wie das schneller vernetzende System aus den Einzelkomponenten; im vorliegenden Fall ist dies das System Glycidylester/Dicarbonsäureanhydrid, während das System Olefinepoxid/Dicarbonsäureanhydrid langsamer vernetzt. Die erforderliche Menge an Di- bzw. Polyol wird dabei empirisch ermittelt.

Das Masseverhältnis zwischen Glycidylester und Olefinepoxid liegt beim erfindungsgemäßen Verfahren vorteilhaft zwischen 9:1 und 1:9, vorzugsweise beträgt es 1:1. Als Glycidylester wird bei diesem Verfahren vorzugsweise Hexahydrophthalsäurebisglycidylester eingesetzt und als cycloaliphatisches Olefinepoxid 3.4-Epoxy-cyclohexylmethyl-3'.4'-epoxycyclohexancarboxylat. Vernetzungsmittel, d.h. Härter, sind vorteilhaft Derivate des Phthalsäureanhydrids, insbesondere Methyltetrahydrophthalsäureanhydrid, Hexahydrophthalsäureanhydrid und Endomethylentetrahydrophthalsäureanhydrid.

Beim erfindungsgemäßen Verfahren werden den Epoxidharzmassen als Di- bzw. Polyole vorteilhaft Polyetherpolyole, insbesondere Polyetherglykole, zugesetzt. Vorzugsweise werden dabei Polyetherpolyole mit einer mittleren Molmasse von etwa 400 verwendet. Weitere verwendbare Di- bzw. Polyole sind beispielsweise Neopentylglykol, 1.6-Hexandiol, 1.4-Butandiol, trifunktionelle Verbindungen, wie Glycerin und Ricinusöl, sowie Gemische der genannten Verbindungen.

Die nach dem erfindungsgemäßen Verfahren hergestellten Epoxidharzformstoffe können vorteilhaft für Isolierbauteile, wie Stützer, Hängeisolatoren und Durchführungen, im Freilufteinsatz verwendet werden.

Anhand von Ausführungsbeispielen soll die Erfindung noch näher erläutert werden.

Verwendet wurden die Systeme Hexahydrophthalsäurebisglycidylester (E1)/ Methyltetrahydrophthalsäureanhydrid (S1) und 3.4-Epoxycyclohexylmethyl-3'.4'-epoxycyclohexancarboxylat (E2)/Methyltetrahydrophthal-säureanhydrid (S1); beide Systeme enthielten $SiO_2$ als Füllstoff. Das System E1/S1 ergibt dabei für sich einen Formstoff mit einer niedrigen thermischen Festigkeit und einer hohen mechanischen Festigkeit, das System E2/S1 einen Formstoff mit hoher thermischer Festigkeit und niederer mechanischer Festigkeit.

Aus den beiden Einzelsystemen wurde folgendes Kombinationssystem E1/S1 - E2/S1 hergestellt (MT = Masseteile): 50 MT E1; 50 MT E2 / 110 MT S1 / 400 MT $SiO_2$ / 3 MT Mel (Beschleuniger auf der Basis von 1-Methylimidazol). Das Eigenschaftsbild - in Form von Biegefestigkeit (BF), Schlagzähigkeit (SZ), Martenstemperatur ($T_M$) und Kriechstromfestigkeit - von spritzgegossenen Normstäben aus den beiden Einzelsystemen und aus dem Kombinationssystem ist in Tabelle 1 wiedergegeben.

Wie aus Tabelle 1 ersichtlich, weist der Formstoff aus dem Kombinationssystem eine gute mechanische und thermische Stabilität auf. Die Übertragung der an den Normstäben erzielten Eigenschaften auf Bauteile mit einem Volumen von ca. 10 l und Wandstärken zwischen 3 und 32 mm ergab jedoch ein negatives Ergebnis in Form von Spritzgußteilen mit ungenügender mechanischer Festigkeit.

Die nähere Untersuchung ergab, wie bereits ausgeführt, daß beim Kombinationssystem E1/S1 - E2/S1 eine synergistische Beschleunigung auftritt. Dieser Sachverhalt kann Tabelle 2 entnommen werden, in der der Temperaturanstieg bei der Vernetzung der verschiedenen Harzsysteme - in Form der Höchsttemperatur $\vartheta_{max}$ (bei der Vernetzung) und der Zeit $t_{max}$ bis zum Erreichen der Höchsttemperatur - wiedergegeben ist.

Der Wert für $t_{max}$ von 12 min für das Kombinationssystem zeigt die beträchtliche synergistische Beschleunigung im Vergleich zu den beiden Einzelsystemen (E1/S1: 16 min; E2/S1: 21 min). Entsprechendes gilt für andere Kombinationssysteme, beispielsweise das System E1/S1-E2/S2, wobei S2 = Hexahydrophthalsäureanhydrid.

Die Bestimmung von $\vartheta_{max}$ und $t_{max}$ erfolgt im allgemeinen nach DIN 16 945. Dabei wird eine Epoxidharzmasse mit einem Volumen von ca. 250 ml unter quasi-adiabatischen Bedingungen vernetzt und dabei der Temperaturanstieg ermittelt. Auf dieselbe Weise wird die Menge an Di- bzw. Polyol bestimmt, die der Epoxidharzmasse zugesetzt werden muß.

Für die spritzgußanaloge Herstellung eines Isolierbauteils, beispielsweise einer 20-kV-Durchführung für $SF_6$-Mittelspannungsschaltanlagen, nach dem erfindungsgemäßen Verfahren wird eine Gießharzmasse folgender Zusammensetzung hergestellt:

50 MT Hexahydrophthalsäurebisglycidylester, 50 MT 3.4-Epoxycyclohexylmethyl-3'.4'-epoxycyclohexancarboxylat, 110 MT Methyltetrahydrophthalsäureanhydrid (Isomerengemisch), 3 MT

3

Beschleuniger (mit 1-Methylimidazol als wirksamer Komponente), 20 MT Polypropylenglykol (mittlere Molmasse: ca. 400) und 400 Masseteile Quarzmehl (6400 Maschen/cm$^2$; 16 h bei 150°C vorgetrocknet). Diese Komponenten werden - in der genannten Reihenfolge in ein geeignetes Rührwerk eingebracht und bei Raumtemperatur unter Rühren im Vakuum (< 5 mbar) 1 h homogenisiert und entgast.

Die auf die vorstehend geschilderte Weise erhaltene Gießharzmasse wird nach dem technisch üblichen Niederdruckspritzgußverfahren (RIM-Verfahren) verarbeitet (Schußgewicht: 12 kg), wobei folgende Verarbeitungsparameter gelten:

Gießformtemperatur: 165°C; Gießformfüllzeit: 1 min;

Formbelegungszeit: 18 min; Druck: 5 bar.

Nach der Entformung wird das Bauteil (außerhalb der Gießform) noch 16 h bei 150°C nachvernetzt.

Das nach dem erfindungsgemäßen Verfahren hergestellte Bauteil besitzt folgende Eigenschaftswerte:

BF: 121 N/mm$^2$; SZ: 12,5 kJ/m$^2$; $T_M$: 123°C.

Dieses Bauteil zeigt bis 50 kV keine $T_E$-Einsatzspannung. Im Gegensatz dazu weisen entsprechende Bauteile, die nicht nach dem erfindungsgemäßen Verfahren hergestellt wurden, d.h. ohne Polypropylenglykol-Zusatz, eine $T_E$-Einsatzspannung < 5 kV auf; derartige Durchführungen sind aber für Mittelspannungsschaltanlagen nicht brauchbar.

## Patentansprüche

1. Verfahren zur Herstellung von kriechstromfesten Epoxidharzformstoffen aus Epoxidharzmassen auf der Basis von Di- oder Polycarbonsäureglycidylestern, di- oder polyfunktionellen cycloaliphatischen Olefinepoxiden, Dicarbonsäureanhydriden und Reaktionsbeschleunigern sowie gegebenenfalls Füllstoffen und weiteren Additiven, dadurch gekennzeichnet, daß eine durch das Verhältnis Glycidylester/ Olefinepoxid bedingte synergistische Erhöhung der Vernetzungsgeschwindigkeit der Epoxidharzmasse und die zur Senkung der Vernetzungsgeschwindigkeit der Epoxidharzmasse wenigstens auf die Vernetzungsgeschwindigkeit des Glycidylester/Dicarbonsäureanhydrid-Systems erforderliche Menge eines Di- oder Polyols anhand der experimentell bestimmten Zeit bis zum Erreichen der Höchsttemperatur während der Vernetzung der Epoxidharzmasse unter quasi-adiabatischen Bedingungen ermittelt und die ermittelte Menge an Di- bzw. Polyol der Epoxidharzmasse zugesetzt wird.

2. Verfahren nach Anspruch 1, dadurch gekennzeichnet, daß das Masseverhältnis zwischen Glycidylester und Olefinepoxid zwischen 9:1 und 1:9 und vorzugsweise etwa 1:1 beträgt.

3. Verfahren nach Anspruch 1 oder 2, dadurch gekennzeichnet, daß als Glycidylester Hexahydrophthalsäurebisglycidylester und/oder als Olefinepoxid 3.4-Epoxycyclohexylmethyl-3'.4'-epoxycyclohexancarboxylat eingesetzt wird.

4. Verfahren nach einem der Ansprüche 1 bis 3, dadurch gekennzeichnet, daß der Epoxidharzmasse Polyetherpolyole, insbesondere Polyetherglykole, zugesetzt werden.

5. Verfahren nach Anspruch 4, dadurch gekennzeichnet, daß Polyetherpolyole mit einer mittleren Molmasse von etwa 400 verwendet werden.

6. Verfahren nach einem oder mehreren der Ansprüche 1 bis 5, dadurch gekennzeichnet, daß als Vernetzungsmittel Phthalsäureanhydrid-Derivate, insbesondere Methyltetrahydrophthalsäureanhydrid, Hexahydrophthalsäureanhydrid oder Endomethylentetrahydrophthalsäureanhydrid, eingesetzt werden.

7. Verwendung der nach dem Verfahren nach einem oder mehreren der Ansprüche 1 bis 6 hergestellten Epoxidharzformstoffe für Isolierbauteile im Freilufteinsatz.

## Claims

1. A process for the production of non-tracking epoxy resin moulded materials from epoxy resin compositions having a basis of di- or polycarboxylic acid glycidyl esters, di- or polyfunctional cycloaliphatic olefinic epoxides, dicarboxylic acid anhydrides and reaction accelerators, possibly together with fillers and further additives, characterised in that a synergistic increase in the cross-linking velocity of the epoxy resin composition, which is conditional on the glycidylester/olefinic epoxide ratio, and the amount of a di- or polyol required to decrease the cross-linking velocity of the epoxy resin composition at least to the cross-linking velocity of the glycidyl ester/dicarboxylic acid anhydride system, is determined on the basis of the experimentally determined time until the maximum temperature has been reached during the cross-linking of the epoxy resin composition under quasi-adiabatic conditions, and the determined quantity of di- or polyol is added to the epoxy resin composition.

2. A process as claimed in Claim 1, characterised in that the mass ratio between glycidyl ester and olefinic epoxide is between 9:1 and 1:9 and preferably is about 1:1.

3. A process as claimed in Claim 1 or 2, characterised in that hexahydrophthalic acid bisglycidyl ester is used as glycidyl ester and/or 3,4-epoxycyclohexylmethyl-3',4'-epoxycyclohexanecarboxylate is used as olefinic epoxide.

4. A process as claimed in one of Claims 1 to 3, <u>characterised in</u> that polyether polyols, in particular but not exclusively polyether glycols are added to the epoxy resin composition.

5. A process as claimed in Claim 4, <u>characterised in</u> that polyether polyols having an average molecular weight of approximately 400 are used.

6. A process as claimed in one or more of Claims 1 to 5, <u>characterised in</u> that phthalic anhydride derivatives, particularly but not exclusively methyltetrahydrophthalic anhydride, hexahydrophthalic anhydride or endomethylenetetrahydrophthalic anhydride, are used as cross-linking agents.

7. The use of epoxy resin moulded materials produced in accordance with the process as claimed in one or more of Claims 1 to 6, for insulating components in open-air use.

**Revendications**

1. Procédé de préparation de matières moulées en résine époxydique, résistant aux courants de fuite, à partir de matières à mouler en résine époxydique à base d'esters glycidyliques de diacides carboxyliques ou de polyacides carboxyliques, d'époxydes d'oléfines cycloaliphatiques difonctionnels ou polyfonctionnels, d'anhydrides d'acides dicarboxyliques et d'accélérateurs de réaction, ainsi que, le cas échéant, de charges et d'autres additifs, caractérisé en ce qu'il consiste à déterminer au moyen de la durée, déterminée expérimentalement, pour atteindre la température la plus élevée, pendant la réticulation de la composition de résine époxydique et dans des conditions quasi-adiabatiques, une augmentation, par synergie de la vitesse de réticulation de la composition de résine époxydique, due au rapport ester glycidylique/époxyde d'oléfine, et la quantité d'un diol ou d'un polyol qui est nécessaire pour abaisser la vitesse de réticulation de la composition de résine époxydique au moins à la vitesse de réticulation du système ester glycidylique/anhydride d'acide dicarboxylique, et à ajouter la quantité déterminée de diol ou de polyol à la composition de résine époxydique.

2. Procédé suivant la revendication 1, caractérisé en ce que le rapport en poids entre l'ester glycidylique et l'époxyde d'oléfine est compris entre 9:1 et 1:9 et de préférence est d'environ 1:1.

3. Procédé suivant la revendication 1 ou 2, caractérisé en ce qu'il consiste à utiliser comme ester glycidylique de l'ester bisglycidylique de l'acide hexahydrophtalique et/ou comme époxyde d'oléfine, du carboxylate de 3,4-époxycyclohexylméthyl-3',4'-époxycyclohexane.

4. Procédé suivant l'une des revendications 1 à 3, caractérisé en ce qu'il consiste à ajouter à la matière à mouler en résine époxydique des polyether polyols, notamment des polyéther glycols.

5. Procédé suivant la revendication 4, caractérisé en ce qu'il consiste à utiliser des polyéther polyols ayant une masse moléculaire moyenne de 400 environ.

6. Procédé suivant une ou plusieurs des revendications 1 à 5, caractérisé en ce qu'il consiste à mettre en oeuvre comme agent de réticulation des dérivés de l'anhydride d'acide phtalique, notamment de l'anhydride d'acide méthyltétrahydrophtalique, de l'anhydride d'acide hexahydrophthalique, ou de l'anydride d'acide endométhylènetétrahydrophthalique.

7. Utilisation de la matière moulée en résine époxydique préparée suivant l'une ou plusieurs des revendications 1 à 6 pour des éléments isolants mis en oeuvre en plein air.